# EUROPÄISCHE PATENTSCHRIFT

(11) **EP 0 581 047 B1**
(45) Veröffentlichungstag und Bekanntmachung des Hinweises auf die Patenterteilung: **17.01.1996**
(21) Anmeldenummer: 93110565.4
(22) Anmeldetag: 02.07.1993
(51) Int. Cl.: B60H 1/00, B60H 1/24

(54) **Kraftfahrzeug mit seitengetrennt einstellbaren Ausrüstungsteilen im Frontbereich**
Motor car with side-divided adjustable equipment parts in the front region
Véhicule à moteur avec chaque composant d'éuipement réglable séparément dans la zone frontale

(30) Priorität: 28.07.1992 DE 4224864
(43) Veröffentlichungstag der Anmeldung: 02.02.1994
(73) Patentinhaber: Bayerische Motoren Werke Aktiengesellschaft, D-80788 München (DE)
(72) Erfinder: Lindner, Thomas, D-8000 München 60 (DE)

(56) Entgegenhaltungen:
- EP-A- 0 272 789
- EP-A- 0 419 704
- EP-A- 0 470 904

## Beschreibung

Die Erfindung bezieht sich auf ein Kraftfahrzeug mit seitengetrennt einstellbaren Ausrüstungsteilen im Frontbereich. Bei diesen Ausrüstungsteilen handelt es sich in erster Linie um Stellglieder für eine Heiz- und/oder Klimaanlage. Damit wird beispielsweise auf der Beifahrerseite die Temperatur und die Luftverteilung unabhängig von der Einstellung auf der Fahrerseite vorgenommen. Daneben kann es sich bei diesen Ausrüstungsteilen auch um Stellglieder für ein Kommunikationssystem, wie beispielsweise ein Radio handeln mit dem die Lautstärke auf der Beifahrerseite unabhängig von der auf der Fahrerseite eingestellt wird. Diese Ausrüstungsteile bieten zwar gegenüber konventionellen, nicht seitengetrennt einstellbaren Ausrüstungsteilen eine deutliche Verbesserung des Komforts. Damit verbunden ist aber auch ein Nachteil, wenn der Beifahrersitz nicht besetzt ist und die Ausrüstungsteile vom Fahrer nicht bzw. nur beschwerlich erreichbar sind. Dann ist es erforderlich, jede Änderung der Einstellung auf der Beifahrerseite zu wiederholen, was mit einer erheblichen Ablenkung und Erschwernis verbunden ist. Der Komfortgewinn bei besetztem Beifahrersitz wird durch einen Komfortverlust, bei unbesetztem Beifahrersitz praktisch aufgehoben.

Der Erfindung liegt die Aufgabe zugrunde ein Kraftfahrzeug der eingangs genannten Art zu schaffen, bei dem unter der Beibehaltung der Möglichkeit einer seitengetrennten Einstellung der Ausrüstungsteile auch dann eine komfortable Einstellmöglichkeit geschaffen ist, wenn der Beifahrersitz nicht besetzt ist.

Die Erfindung löst diese Aufgabe durch die kennzeichnenden Merkmale des Patentanspruchs 1.

Wesentlich für die Erfindung ist die Möglichkeit, sowohl eine seitengetrennte als auch eine synchrone Einstellung der Ausrüstungsteile auf der Fahrer- und Beifahrerseite vorzunehmen. Ersteres wird dann geltend, wenn der Beifahrersitz besetzt ist. Der Beifahrer kann dann individuell "seine" Ausrüstungsteile einstellen. Ist der Beifahrersitz hingegen nicht besetzt, so kann die erfindungsgemäße Betriebsart gewählt werden, mit dem es dem Fahrer möglich ist, die Ausrüstungsteile auf der Beifahrerseite entsprechend der Einstellung "seiner" Ausrüstungsteile zu verändern. Das Umschalten zwischen der seitengetrennten und der synchronen Betriebsart kann willkürlich vorgenommen sein. Hierfür bieten sich Schalter oder sonstige Befehlsgeber an, die willkürlich durch den Beifahrer oder den Fahrer zu betätigen sind.

Zusätzlich oder unabhängig davon ist es aber auch möglich, die Wahl der Betriebsart selbsttätig vorzunehmen. So ist es beispielsweise möglich, bei Inbetriebnahme des Kraftfahrzeugs einen Synchronbetrieb zwischen Fahrer und Beifahrerseite vorzusehen. Wird auf der Beifahrerseite eines der Ausrüstungsteile willkürlich und unabhängig von dem entsprechenden Ausrüstungsteil auf der Fahrerseite verstellt, so kann damit selbsttätig die Synchronisation aufgehoben werden und auf die Betriebsart der individuellen Einstellung der Ausrüstungsteile auf der Beifahrerseite umgeschaltet werden. Anhand der individuellen Einstellung des Ausrüstungsteils auf der Beifahrerseite wird somit erkennbar, daß der Beifahrersitz auch besetzt ist.

Die Besetzung des Beifahrersitzes kann aber auch direkt mit Hilfe einer geeigneten Sensorik, wie beispielsweise einem Druckschalter im Beifahrersitz bzw. einem Näherungssensor, der auf dem Beifahrersitz ausgerichtet ist erkannt werden. In diesem Fall ist es möglich, bei Besetzung des Beifahrersitzes stets die seitengetrennte Einstellungs-Betriebsart vorzugeben.

Schließlich kann die Betriebsart auch mit Hilfe eines Steuergerätes auslösbar sein, mit dem ein Beifahrer-Airbag aktivierbar ist. Ein derartiges Steuergerät unterscheidet, ob der Beifahrersitz besetzt ist und aktiviert den Airbag nur dann, wenn dies aufgrund der Besetzung des Beifahrersitzes notwendig ist. Das Ausgangssignal dieses Steuergeräts kann im Rahmen der Erfindung für die selbsttätige Wahl der Betriebsart verwendet werden.

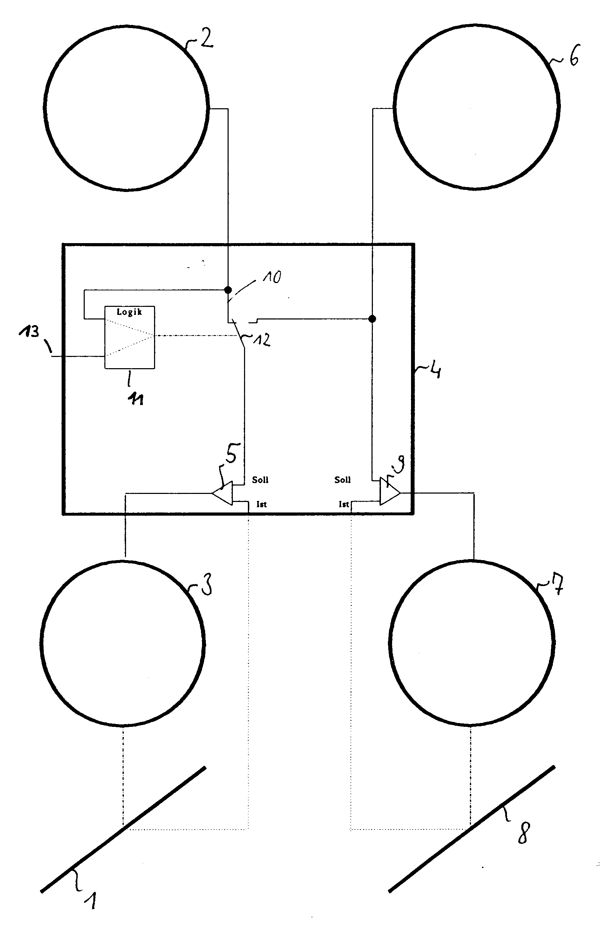

Anhand der Zeichnung ist die Erfindung weiter erläutert.

Es zeigt die einzige Figur. Den prinzipiellen Aufbau für ein Ausrüstungsteil eines Kraftfahrzeugs, das auf der Beifahrerseite eingesetzt ist und dessen Betriebsart wählbar ist.

Ein Ausrüstungsteil 1 in Form einer Luftsteuerklappe ist schematisch dargestellt und dient beispielsweise dazu, die Luftverteilung auf der Beifahrerseite zu steuern. Hierzu ist ein Stellglied 2 vorgesehen, bei dem es sich beispielsweise um einen Drehsteller handelt, und der einen Sollwert für die gewünschte Einstellung liefert. Das Stellglied 2 wirkt über einen Antrieb 3, beispielsweise einen Gleichstrommotor, auf das Ausrüstungsteil 1. Zwischen Stellglied 2 und Antrieb 3 befindet sich ein Steuergerät 4, das den vom Stellglied 2 vorgegebenen Sollwert mit dem momentanen Istwert des Ausrüstungsteils 1 vergleicht. Bei einer Sollwert-Istwert-Differenz wird das Ausrüstungsteil über den Antrieb 3 solange angesteuert, bis die Differenz Null ist. Hierzu ist innerhalb des Steuergeräts 4 ein Soll-Ist-Vergleicher 5 vorgesehen, der den Antrieb 3 steuert.

Für die Fahrerseite ist eine entsprechende Anordnung aus einem Stellglied 6 und einem Antrieb 7 für ein Ausrüstungsteil 8 vorgesehen. Das Teil 8 steuert die Luftverteilung auf der Fahrerseite in Abhängigkeit von dem mit dem Stellglied 6 vorgegebenen Sollwert und dem jeweiligen Istwert sowie mit Hilfe eines Vergleichers 9 analog dem Vergleicher 5.

Der dargestellte Aufbau ist für Kraftfahrzeuge üblich und ermöglicht eine erste Betriebsart, bei der eine seitengetrennte Einstellung der Ausrüstungsteile 1 und 8 durch Vorgabe individueller Sollwerte mit Hilfe der Stellglieder 2 und 6 erfolgt. Diese Betriebsart ist dann sinnvoll und vorgesehen, wenn der Beifahrersitz besetzt ist.

Ist der Beifahrersitz hingegen leer, so wird die andere Betriebsart selbsttätig eingestellt. Hierzu ist im Steuergerät 4 ein Sollwertumschalter 10 vorgesehen, der durch eine Logik 11 gesteuert ist. Die Logik 11 erhält ein Eingangssignal 13 einer nicht dargestellten Beifahrer-Sitz-Belegt-Erkennungsschaltung, die Teil einer Einrichtung ist, mit der bei nicht belegtem Beifahrersitz das Auslösen eines Beifahrer-Airbags verhindert wird. Ist der Beifahrersitz nicht besetzt, so wird durch die Logik 11 ein Umschalter 12 des Sollwertumschalters 10 aus der dargestellten Lage in die andere Lage gebracht, in der der Umschalter 10 das Stellglied 6 mit den Vergleichen 5 und 9 verbindet. Die beiden Vergleicher 5 und 9 steuern die beiden Antriebe 3 und 7 und damit die Ausrüstungsteile 1 und 8 synchron.

Ist der Beifahrersitz besetzt, so wird der Umschalter 12 wieder in die eingezeichnete Lage umgeschaltet. Die Antriebe 3 und 7 werden unabhängig voneinander entsprechend der Vorgabe durch die Stellglieder 2 und 6 eingestellt.

Neben den beispielhaft gezeigten Ausrüstungsteilen 1 und 8 können weitere Ausrüstungsteile wie nicht im einzelnen dargestellte Klappen, Drosseln und Ventile für eine Heiz- und Klimaanlage mit Hilfe zugeordneter Antriebe durch das Steuergerät 4 gesteuert werden.

Ergänzend oder alternativ zu der dargestellten selbsttätigen Einstellung der synchronen bzw. seitengetrennten Einstellung der Ausrüstungsteile 1 und 8 ist es möglich, diese Einstellung auch willkürlich zu wählen. Hierfür kann beispielsweise ein nicht dargestellter Tastschalter vorgesehen sein, der ein Signal entsprechend dem Signal 13 der genannten Erkennungsschaltung auf die Logik 11 gibt. Auf einen Schaltbefehl des Tastschalters hin wird der Umschalter 12 in die jeweils andere Stellung gebracht. Damit kann willkürlich zwischen den beiden Betriebsarten umgeschaltet werden.

## Patentansprüche

1. Kraftfahrzeug mit seitengetrennt durch Vorgabe individueller Sollwerte mit Hilfe von Stellgliedern (2, 6) einstellbaren Ausrüstungsteilen (1, 8) im Frontbereich, gekennzeichnet durch eine Betriebsart, bei der die Einstellung der Ausrüstungsteile (1, 8) auf der Beifahrerseite synchron mit der entsprechenden, durch ein Stellglied (6) vorgenommenen Einstellung auf der Fahrerseite erfolgt.

2. Kraftfahrzeug nach Anspruch 1, dadurch gekennzeichnet, daß die Betriebsart willkürlich wählbar ist.

3. Kraftfahrzeug nach Anspruch 1 oder 2, dadurch gekennzeichnet, daß die Betriebsart selbsttätig wählbar ist.

4. Kraftfahrzeug nach Anspruch 3, dadurch gekennzeichnet, daß die Betriebsart bei Besetzung des Beifahrersitzes wählbar ist.

5. Kraftfahrzeug nach Anspruch 4, dadurch gekennzeichnet, daß die Betriebsart durch ein Steuergerät wählbar ist, mit dem ein Beifahrer-Airbag aktivierbar ist.

## Claims

1. A motor vehicle with equipment parts (1, 8) in the front region adjustable separately for each side by the setting of individual desired values through control elements (2, 6), characterised by an operating mode in which the setting of the equipment parts (1, 8) on the passenger side is effected synchronously by the corresponding setting on the driver's side effected through a control element (6).

2. A motor vehicle according to claim 1, characterised in that the operating mode can be selected by choice.

3. A motor vehicle according to claim 1 or 2, characterised in that the operating mode can be selected automatically.

4. A motor vehicle according to claim 3, characterised in that the operating mode is selectable when the passenger seat is occupied.

5. A motor vehicle according to claim 4, characterised in that the operating mode can be selected through a control device, by means of which a passenger's airbag can be activated.

## Revendications

1. Véhicule à moteur avec des composants d'équipement (1, 8) dans la zone frontale, composants qui peuvent être réglés, à l'aide d'organes de réglage (2, 6), de façon séparée par côté en prédéfinissant des valeurs de consigne individuelles, véhicule à moteur caractérisé par un mode de fonctionnement dans lequel le réglage des composants d'équipement (1, 8) du côté de la personne qui est à côté du conducteur, a lieu de façon synchrone avec le réglage correspondant du côté du conducteur, effectué par un organe de réglage (6).

2. Véhicule à moteur selon la revendication 1, caractérisé en ce que le mode de fonctionnement peut être choisi à volonté.

3. Véhicule à moteur selon la revendication 1 ou 2, caractérisé en ce que le mode de fonctionnement peut être choisi automatiquement.

4. Véhicule à moteur selon la revendication 3, caractérisé en ce que le mode de fonctionnement peut être choisi quand le siège à côté du conducteur est occupé.

5. Véhicule à moteur selon la revendication 4, caractérisé en ce que le mode de fonctionnement peut être choisi par un appareil de commande par lequel peut être actionné un coussin d'air (airbag) pour la personne à côté du conducteur.
